(19) **Europäisches Patentamt European Patent Office Office européen des brevets**

(11) **EP 4 303 775 B1**

(12) **FASCICULE DE BREVET EUROPEEN**

(45) Date de publication et mention de la délivrance du brevet:
**17.09.2025 Bulletin 2025/38**

(21) Numéro de dépôt: **23183887.1**

(22) Date de dépôt: **06.07.2023**

(51) Classification Internationale des Brevets (IPC):
**G06N 5/01** *(2023.01)*  **G06N 5/045** *(2023.01)*
**G06N 20/20** *(2019.01)*  *G01R 31/00* *(2006.01)*

(52) Classification Coopérative des Brevets (CPC):
**G06N 5/01; G06N 5/045; G06N 20/20;** G06N 20/10

(54) **PROCÉDÉ ET DISPOSITIF DE DÉTECTION D'ANOMALIE ET DE DÉTERMINATION D'EXPLICATION ASSOCIÉE DANS DES SÉRIES TEMPORELLES DE DONNÉES**

VERFAHREN UND VORRICHTUNG ZUR ERKENNUNG VON ANOMALIEN UND ZUR BESTIMMUNG DER ZUGEHÖRIGEN ERKLÄRUNG IN ZEITLICHEN DATENREIHEN

METHOD AND DEVICE FOR ANOMALY DETECTION AND ASSOCIATED EXPLANATION DETERMINATION IN DATA TIME SERIES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.07.2022 FR 2207036**

(43) Date de publication de la demande:
**10.01.2024 Bulletin 2024/02**

(73) Titulaire: **THALES**
**92400 Courbevoie (FR)**

(72) Inventeurs:
- **THOUVENOT, Vincent**
  **91767 Palaiseau Cedex (FR)**
- **SAUSSET, François**
  **91767 Palaiseau Cedex (FR)**

(74) Mandataire: **Lavoix**
**2, place d'Estienne d'Orves**
**75441 Paris Cedex 09 (FR)**

(56) Documents cités:
**WO-A1-2022/093271    US-A1- 2021 390 457**

# Description

DOMAINE TECHNIQUE

La présente invention concerne un procédé de détection d'anomalie et de détermination d'explication associée dans des séries temporelles de données, un dispositif associé et un programme d'ordinateur associé.

L'invention se situe dans le domaine de la détermination d'anomalies à partir de valeurs de données, et de l'explication de ces anomalies permettant l'exploitation des résultats par des opérateurs.

L'invention trouve des applications particulières dans divers domaines techniques, en particulier dans la détection et explication d'anomalies de fonctionnement de tout type d'équipements en vue de l'application d'une maintenance efficace ou d'une maintenance prédictive.

Dans ce cas, des séries temporelles de données sont fournies par des capteurs qui prélèvent des valeurs d'environnement ou de fonctionnement d'équipements industriels à des intervalles temporels donnés.

Les équipements surveillés sont par exemple des machines industrielles mises en mouvement par des moteurs électriques, ou des processeurs graphiques GPU dans une ferme de processeurs, ou des équipements d'un réseau électrique intelligent.

L'invention s'applique également dans le domaine de la cybersécurité, pour déterminer des anomalies dans des requêtes d'accès à un système informatique issues d'une même adresse IP, permettant de détecter une cyber-attaque.

Dans ces divers domaines, des très grands volumes de données comportant des valeurs représentatives du fonctionnement du système ou des équipements observés sont prélevées au cours du temps. Ces données, dans leur forme brute, constituent un volume de données très important, qui n'est pas exploitable par un opérateur humain pour effectuer une détection d'anomalies et une intervention de prévention ou de maintenance suite à une telle détection d'anomalie.

Dans les dernières années, diverses méthodes calculatoires, en particulier basées sur l'application de l'intelligence artificielle, ont été mises en œuvre pour analyser des grands volumes de données, afin de détecter d'éventuelles anomalies. Cependant, les algorithmes d'intelligence artificielle ont un fonctionnement de « boîte noire », non compréhensible par les opérateurs humains en général.

Une difficulté supplémentaire apparaît pour le traitement de séries temporelles, les outils connus à l'heure actuelle étant des outils statistiques qui ne sont pas adaptés pour une prise en compte de séries temporelles.

Il existe donc un besoin de fournir une détection d'anomalies et des explications associées sur des séries temporelles de données, pour permettre une prise en charge adéquate, notamment la maintenance prédictive dans le cas de la surveillance de fonctionnement d'équipements.

WO 2022/093271 A1 décrit une méthode pour un système avec de multiples dispositifs qui fournissent des données de capteurs qui sont non étiquetées (unlabelled). La méthode consiste à (1) extraire des caractéristiques des données de capteurs non étiquetées, à utiliser ces caractéristiques pour exécuter une détection de défaillance par le biais d'un modèle d'apprentissage automatique, à générer des étiquettes de détection de défaillance et (2) à fournir à la fois les caractéristiques extraites et les étiquettes de détection de défaillance à un modèle de prédiction de défaillance afin de générer des prédictions de défaillance et une séquence de caractéristiques. Le document mentionne l'utilisation de modèles explicables (« model selection and explainable AI », [0034]).

US 2021/390457 A1 porte sur un procédé pour interpréter les modèles d'apprentissage automatique et attribuer de l'importance à certaines caractéristiques du modèle (celles qui sont prépondérantes). Ce procédé peut fournir des informations globales sur l'impact des caractéristiques et des informations locales sur les explications de la prédiction. Le procédé utilise le calcul des valeurs de Shapley.

RÉSUMÉ

A cet effet, l'invention propose, selon un aspect, un procédé de détection d'anomalie et de détermination d'explication associée dans des séries temporelles de données selon la revendication 1.

Avantageusement, le procédé de détection d'anomalie et de détermination d'explication associée proposé s'appuie sur des vecteurs descriptifs de séries temporelles de données, et permet d'obtenir un sous-ensemble de séries temporelles en anomalie et pour chacune, une ou plusieurs valeurs de données de la série temporelle ayant une influence sur le score obtenu.

Le procédé de détection d'anomalie et de détermination d'explication associée selon l'invention peut également présenter une ou plusieurs des caractéristiques des revendications dépendantes 2 à 5, prises indépendamment ou selon toutes les combinaisons techniquement envisageables.

Selon un autre aspect, l'invention concerne un dispositif de détection d'anomalie et de détermination d'explication associée dans des séries temporelles de données selon la revendication 7, chaque série temporelle ayant une durée associée et comportant un nombre N de valeurs de fonctionnement d'un équipement ou d'un système, relevées à des intervalles réguliers pendant ladite durée, le dispositif comportant un processeur de calcul configuré pour mettre en œuvre :

- un module de projection, pour chaque série temporelle, des valeurs de ladite série temporelle sur un nombre M de fonctions de base et obtention d'un vecteur descriptif de ladite série temporelle de taille M,

- un module d'entraînement d'un modèle de détermination d'anomalie paramétré, par apprentissage machine sur au moins une partie des vecteurs descriptifs calculés, ledit modèle de détermination d'anomalie permettant de calculer un score d'anomalie par vecteur descriptif,
- un module application du modèle de détermination d'anomalie aux vecteurs descriptifs des séries temporelles et obtention d'un score d'anomalie par série temporelle,
- un module de détermination d'un sous-ensemble de séries temporelles comportant une anomalie par comparaison du score d'anomalie de chaque série temporelle à un seuil d'anomalie prédéterminé ;
- un module de détermination, pour chaque série temporelle dudit sous-ensemble, à partir du vecteur descriptif de ladite série temporelle, d'au moins une partie des valeurs dudit vecteur descriptif ayant une influence dans l'obtention du score d'anomalie de ladite série temporelle.

Selon un autre aspect, l'invention concerne un support d'enregistrement d'informations, sur lequel sont mémorisées des instructions logicielles pour l'exécution d'un procédé de détection d'anomalie et de détermination d'explication associée tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en œuvre par un dispositif électronique programmable, mettent en œuvre un procédé de détermination d'anomalie et d'explication associée tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

la figure 1 illustre un système de surveillance de fonctionnement d'équipements mettant en œuvre l'invention selon un premier mode de réalisation ;
la figure 2 est un synoptique des principales étapes d'un premier mode de réalisation d'un procédé de détermination d'anomalie et d'explication associée ;
la figure 3 est un synoptique des principales étapes d'un deuxième mode de réalisation d'un procédé de détermination d'anomalie et d'explication associée.

L'invention sera décrite ci-après dans son application dans le domaine de la détection d'anomalies de fonctionnement d'équipements à partir de séries de données qui comportent des valeurs prélevées par des capteurs.

Il est entendu que l'invention ne se limite pas à cette application, et peut également être appliquée, de manière analogue, pour la détection d'anomalie et la détermination d'explications associées dans des séries temporelles représentatives du fonctionnement d'un système, par exemple des accès réseau ou des accès aux disques dans un système informatique.

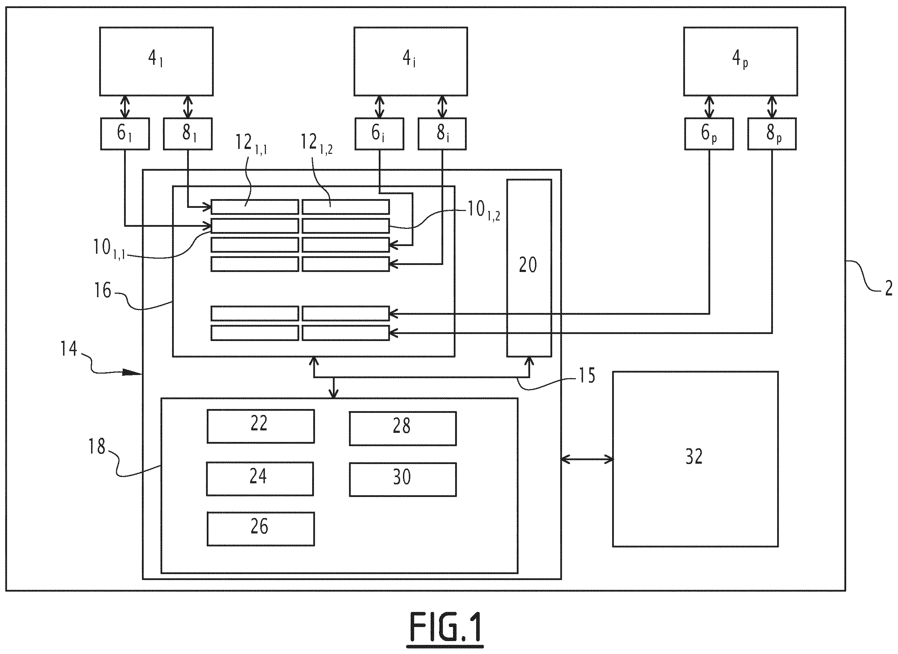

La figure 1 illustre schématiquement un système 2 de surveillance de fonctionnement d'équipements $4_1$ à $4_P$, ces équipements étant, dans un exemple d'application, des moteurs électriques de même type et fonctionnant en parallèle dans des conditions analogues.

Le nombre P est un nombre entier quelconque, par exemple P=100.

Le système 2 de surveillance de fonctionnement effectue une détection d'anomalies de fonctionnement, par exemple pour la maintenance prédictive des équipements.

Chaque équipement $4_i$ est associé à des capteurs $6_i$, $8_i$, configurés pour mesurer des données de fonctionnement de l'équipement $4_i$ à des intervalles temporels réguliers.

A titre d'exemple non limitatif, les capteurs $6_i$ sont des capteurs de température, adaptés à mesurer la température dans ou à proximité de chaque moteur $4_i$, et les capteurs $8_i$ sont des capteurs de vitesse de piston de chaque moteur $4_i$.

Par exemple, chaque capteur fournit une valeur de mesure toutes les minutes, et des valeurs sont regroupées en séries temporelles respectives de température et de vitesse de piston, chaque série temporelle étant associée à une durée temporelle D donnée, par exemple égale à 24 heures (24h), ou en d'autres termes, un jour.

Dans cet exemple, chaque série temporelle comporte N=1440 valeurs, qui sont des valeurs de fonctionnement de l'équipement associé.

Bien entendu, la durée temporelle D est choisie, et peut être quelconque, e.g. quelques minutes, une heure, quelques heures, plusieurs jours etc.

Ainsi, pour un équipement $4_i$ d'indice i on obtient pour des séries temporelles :

$$Temp_k^i = \left\{ t_{k,1}^i, \dots, t_{k,N}^i \right\}$$

$$Piston_k^i = \left\{ p_{k,1}^i, \dots, p_{k,N}^i \right\}$$

Où k représente la période de 24h considérée.

Par exemple, on obtient, pour chaque équipement, plusieurs séries temporelles qui se succèdent dans le temps, par exemple k=1 pour une première période de 24h, k=2 pour la période de 24h suivante et ainsi de suite.

Bien entendu, le nombre de capteurs utilisé est variable, par exemple compris entre 1 et un nombre quelconque de capteurs.

Dans le cas où un seul capteur est utilisé par équipement, une seule série temporelle est obtenue par équipement et par période de mesure. Dans ce cas, les séries temporelles sont dites monovariées.

Dans le cas où plusieurs capteurs sont utilisés, plusieurs séries temporelles sont obtenues par équipement et par période. Dans ce cas, les séries temporelles sont dites multivariées.

Le système 2 comprend en outre un dispositif 14 de détection d'anomalie et de détermination d'explication associée, qui est un dispositif électronique programmable, par exemple un ordinateur.

Le dispositif 14 comporte une unité de mémoire électronique 16, au moins un processeur de calcul 18 et une interface 20 de communication avec des dispositifs distants, par un protocole de communication choisi, par exemple un protocole filaire et/ou un protocole de communication radio. Les éléments du dispositif 14 sont adaptés à communiquer via un bus de communication 15.

Les capteurs 6i, 8i sont adaptés pour transmettre les données de mesure au dispositif 14, par exemple via une liaison de communication radio ou filaire.

Les séries temporelles respectives $Temp_k^i$ et $Piston_k^i$ reçues sont mémorisées, sous forme appropriée $10_{i,k}$, $12_{i,k}$, dans une mémoire électronique 16 du dispositif 14.

Chaque série temporelle d'indice i mémorisée comporte N valeurs représentatives du fonctionnement de l'équipement $4_i$ pendant une période de durée D.

Le processeur de calcul 18 est configuré pour mettre en œuvre un module 22 de projection, configuré pour appliquer une projection des valeurs d'une série temporelle sur un nombre M de fonctions de base afin d'obtenir un vecteur descriptif, de taille M, de la série temporelle. Le nombre M est paramétrable, et est inférieur ou égal au nombre N de valeurs d'une série temporelle.

Le processeur 18 est en outre configuré pour mettre en œuvre un module 24 d'entraînement d'un algorithme, mettant en œuvre un modèle paramétré, de détermination d'anomalie par apprentissage machine sur au moins une partie des vecteurs descriptifs calculés. L'algorithme de détermination d'anomalie permet de calculer un score d'anomalie par vecteur descriptif.

Par exemple, le module 24 met en œuvre l'entraînement des paramètres d'un modèle de détermination d'anomalie dit de forêt d'isolement (de l'anglais « isolation forest »), connu dans le domaine des algorithmes d'apprentissage machine.

L'entraînement mis en œuvre est non supervisé, en d'autres termes il est effectué uniquement à partir des données relevées sans utilisation d'exemples préalablement labélisés par des experts.

En outre, le processeur 18 met en œuvre un module 26 d'application du modèle de détermination d'anomalie, avec les paramètres déterminés par apprentissage, aux vecteurs descriptifs des séries temporelles pour calculer un score d'anomalie par série temporelle.

Le score d'anomalie est une valeur représentative d'une présence d'anomalie dans les données traitées. Dans un mode de réalisation, plus le score d'anomalie est élevé pour un équipement donné, plus il est considéré que le fonctionnement observé est anormal.

Le processeur 18 met également en œuvre un module 28 de détermination d'un sous-ensemble de séries temporelles comportant une anomalie, mettant en œuvre une comparaison du score d'anomalie de chaque série temporelle à un seuil d'anomalie prédéterminé pour déterminer un sous-ensemble de séries temporelles comportant une anomalie, et un module 30 de détermination, pour chaque série temporelle en anomalie, à partir de son vecteur descriptif, d'au moins une partie des valeurs du vecteur descriptif ayant une influence dans l'obtention du score d'anomalie de ladite série temporelle.

En particulier, le module 30 permet de fournir une explication, plus aisément compréhensible et utilisable par un opérateur humain, de la source d'anomalie observée. Cela permet notamment de réaliser une maintenance prédictive, par exemple en déterminant une cause de dysfonctionnement d'un équipement qui se traduit par une observation d'anomalie dans les données des séries temporelles observées.

Le module 30 met en œuvre, dans un mode de réalisation, un algorithme permettant de calculer, pour une série temporelle donnée, un niveau d'influence de chaque composante du vecteur descriptif et/ou de calculer une ou plusieurs série(s) temporelle(s) alternative(s), la ou chaque série temporelle alternative étant calculée à partir de ladite série temporelle donnée et respectant des règles prédéterminées, la ou chaque série temporelle alternative ayant un score d'anomalie dans le domaine de fonctionnement « normal », en particulier un score d'anomalie inférieur au seuil d'anomalie prédéterminé. Une telle série temporelle alternative est également appelée série temporelle de contre-exemple ou contrefactuelle (en anglais « counterfactual series »).

Plusieurs modes de réalisations des modules 22, 24, 26, 28 et 30 seront décrits ci-après.

Dans un mode de réalisation, les modules 22, 24, 26, 28 et 30 sont réalisés sous forme d'instructions logicielles formant un programme d'ordinateur, qui, lorsqu'il est exécuté par un dispositif électronique programmable, met en œuvre un procédé de détection d'anomalie et de détermination d'explication associé selon l'invention.

En variante non représentée, les modules 22, 24, 26, 28 et 30 sont réalisés chacun sous forme de composants logiques programmables, tels que des FPGA (de l'anglais *Field Programmable Gate Array)*, des microprocesseurs, des composants GPGPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Des modes de réalisation plus détaillés des modules 22, 24, 26, 28 et 30 seront décrits ci-après.

Le dispositif 14 de détection d'anomalie et de détermination d'explication associée est en outre connecté à une interface homme-machine 32, permettant d'afficher des données sous forme interprétable par un opérateur. Par exemple, l'interface homme-machine 32 comporte un écran d'affichage.

L'interface homme-machine 32 fait partie du dispositif 14.

Selon une variante, l'interface homme machine est distante du dispositif 14.

En particulier, cela permet d'afficher des données relatives aux anomalies des équipements surveillés, et des explications relatives aux anomalies détectées, en particulier des informations obtenues par le module 30. Par exemple, l'affichage de séries temporelles alternatives permet plus aisément à un opérateur de comprendre quelles valeurs des séries temporelles observées induisent un score d'anomalie supérieur au seuil d'anomalie, et par conséquent quelles actions de maintenance sont à engager.

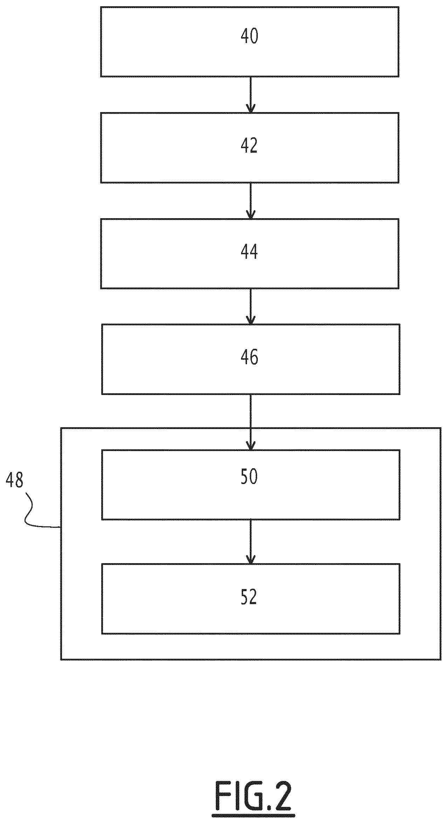

La figure 2 est un synoptique des principales étapes d'un premier mode de réalisation du procédé de détection d'anomalie et de détermination d'explication associée.

Dans ce premier mode de réalisation la détection est appliquée sur des séries temporelles de données mémorisées, en d'autres termes il s'agit d'une détection d'anomalies et une détermination d'explication associée qui est effectuée a posteriori.

Les résultats obtenus relatifs à la détection d'anomalies et leurs explications sont par exemple applicables pour la calibration des équipements.

Le procédé s'applique dans ce mode de réalisation sur des séries temporelles préalablement mémorisées, par exemple sur P équipements observés, sur K périodes temporelles d'observation successives, chaque série temporelle comportant N valeurs de fonctionnement d'un des équipements sur une période temporelle d'observation.

A titre d'exemple non limitatif, P=100, K=1 et la durée d'une période temporelle est des 24h, une série temporelle comportant des valeurs prélevées toutes les minutes, N=1440.

En alternative, le procédé s'applique également avec des séries temporelles comportant des valeurs mesurées pour un équipement, sur un nombre K, par exemple K=100, de séries temporelles successives.

A titre d'exemple non limitatif, on considère que chaque équipement est équipé d'un capteur de température, et les valeurs de fonctionnement prélevées sont des valeurs de température.

Dans ce premier mode de réalisation, le procédé comporte une étape 40 d'application, pour chacune des séries temporelles mémorisées, d'une projection sur une base de M fonctions choisies.

Le nombre M est un paramètre dont la valeur indique une profondeur de projection.

De préférence, M est strictement inférieur à N.

Par exemple M est plus petit que la moitié de N.

Par exemple, M est fixé à une valeur prédéterminée, par exemple comprise entre 5 et 10, et par exemple égale à 8, pour tout N supérieur à cette valeur prédéterminée.

Dans un mode de réalisation, la base de fonctions choisie est une base de transformation en ondelettes, par exemple la base d'ondelettes de Haar, bien connue dans le domaine du traitement du signal.

Un sous-ensemble de M fonctions de la base d'ondelettes de Haar de taille N est choisi pour appliquer la projection, par exemple les M premières fonctions de la base. Par exemple M=8.

Selon une variante, la base de fonctions utilisée est une base de fonctions B-Splines.

Soit une série temporelle X de N valeurs : $(x_1, ...., x_N)$ et soit H une matrice formée de M fonctions de base formant une base de projection. La matrice H est de taille MxN, M étant le nombre de lignes, N le nombre de colonnes.

La projection de X sur H est réalisée par calcul du produit scalaire entre H et X, et le résultat est un vecteur d, appelé vecteur descriptif de la série temporelle X, de taille M.

De manière générique :

$$d = H \cdot X$$

Avec $d = [d_1, ... , d_M]$, où chaque composante $d_i$ du vecteur descriptif d est une variable descriptive de la série temporelle X associée.

A titre d'exemple numérique simplifié, la matrice H est la suivante, pour des dimensions d'exemple N=8 et M=5 :

$$H = \begin{bmatrix} 1 & 1 & 1 & 1 & 1 & 1 & 1 & 1 \\ 1 & 1 & 1 & 1 & 0 & 0 & 0 & 0 \\ 0 & 0 & 0 & 0 & 1 & 1 & 1 & 1 \\ 1 & 1 & 0 & 0 & 0 & 0 & 0 & 0 \\ 0 & 0 & 1 & 1 & 0 & 0 & 0 & 0 \end{bmatrix}$$

L'étape 40 de projection est appliquée pour chaque série temporelle pour obtenir un vecteur descriptif de la série temporelle.

Les vecteurs descriptifs obtenus sont temporairement mémorisés dans une mémoire électronique du dispositif électronique programmable mettant en œuvre le procédé.

Le procédé comporte également une étape 42 d'apprentissage non supervisé des paramètres d'un modèle de détermination d'anomalie, pour la mise en œuvre d'un algorithme de détermination d'anomalie, sur au moins une partie des vecteurs descriptifs calculés.

De préférence, tous les vecteurs descriptifs calculés à l'étape de projection 40 sont utilisés.

De préférence, un algorithme d'apprentissage machine (en anglais « machine learning ») de type forêt d'isolement (ou « Isolation Forest ») est mis en œuvre.

En alternative, une autre méthode de détection d'anomalie non supervisée, produisant un score d'anomalie, est utilisée, par exemple la méthode connue sous le nom de « local factor outlier ».

L'algorithme de détermination d'anomalie prend en entrée un vecteur descriptif de taille M et fournit en sortie un score d'anomalie, permettant d'inférer la présence potentielle d'anomalie dans les données de la série temporelle associée au vecteur descriptif.

Par exemple, les scores d'anomalies obtenus en sortie sont par exemple normalisés entre une valeur minimale et une valeur maximale. Plus le score d'anomalie est proche de la valeur maximale, plus la présence d'anomalie est probable, et inversement, plus le score d'anomalie est proche de la valeur minimale, plus on considère qu'il s'agit d'un fonctionnement « normal ».

L'étape d'apprentissage 42 est suivie d'une étape 44 d'application de l'algorithme mettant en œuvre le modèle de détermination d'anomalie paramétré à chaque vecteur descriptif pour calculer le score d'anomalie associé.

Ainsi, pour chaque série temporelle traitée on obtient un score d'anomalie associé, en utilisant le vecteur descriptif de la série temporelle.

Dans un mode de réalisation, on obtient ainsi un score d'anomalie pour chaque équipement observé.

Le procédé comprend ensuite une étape 46 de comparaison de chaque score d'anomalie calculé à un seuil d'anomalie prédéterminé ou calculé dynamiquement.

Le seuil d'anomalie prédéterminé est compris entre la valeur minimale et la valeur maximale de score d'anomalie. Par exemple si le score est entre 0 et 1, le seuil d'anomalie est fixé 0.5.

Selon une variante, on fixe un pourcentage P, par exemple P=10%, et on considère que les scores anormaux sont les P scores les plus élevés. Une valeur de seuil d'anomalie en découle.

Selon une autre variante, les score d'anomalie calculés sont classés du plus petit au plus grand (ou vice-versa), et de calculer des écarts entre scores d'anomalie. Par exemple, les scores anormaux sont ceux qui suivent l'écart le plus élevé. Par exemple, si les scores sont respectivement {0,1 ; 0,2 ; 0,3 ; 0,7 ; 0,8} les scores anormaux sont 0,7 et 0,8, l'écart le plus élevé étant entre 03, et 0,7.

Si le score d'anomalie est supérieur au seuil d'anomalie prédéterminé ou calculé dynamiquement, la série temporelle correspondante est labélisée comme comportant une anomalie.

Un sous-ensemble de séries temporelles en anomalie (i.e. comportant un anomalie) relativement au seuil d'anomalie prédéterminé est ainsi obtenu, le cas échéant.

Dans le cas où un score d'anomalie est obtenu par équipement observé, de manière analogue un sous-ensemble d'équipements en anomalie relativement au seuil d'anomalie prédéterminé est ainsi obtenu.

Le procédé comprend ensuite une étape 48 d'explication des anomalies détectées. Pour chaque série temporelle du sous-ensemble de séries temporelles en anomalie, l'étape 48 met en œuvre une détermination, à partir du vecteur descriptif de ladite série temporelle, d'au moins une partie des valeurs de la série temporelle ayant une influence dans l'obtention du score d'anomalie.

Dans le mode de réalisation de la figure 2, l'étape 48 comporte deux sous-étapes, une première sous-étape 50 de calcul de niveau d'influence de chaque composante du vecteur descriptif de la série temporelle considérée et une étape 52 de calcul d'une ou plusieurs série(s) temporelle(s) alternative(s), chaque série temporelle alternative étant une série temporelle de contre-exemple ou contrefactuelle. Chaque série temporelle alternative est une série que l'algorithme de détermination d'anomalie aurait classée comme normale, et chaque série alternative est proche de la série d'origine.

La sous-étape 50 met en œuvre un calcul des valeurs de Shapley pour chaque composante du vecteur descriptif, chaque valeur de Shapley fournissant un niveau d'influence de cette composante.

A partir du niveau d'influence de chaque composant du vecteur descriptif il est possible de calculer un niveau d'influence associé à chaque valeur de la série temporelle associée au vecteur descriptif.

Les valeurs de Shapley sont utilisées initialement pour la répartition des gains dans le domaine des jeux coopératifs dans la théorie des jeux, et leur application dans le domaine de l'apprentissage machine est connu.

La formule de calcul des valeurs de Shapley pour chaque élément d'un ensemble d'éléments est connue.

Dans son application ici, l'ensemble d'éléments est l'ensemble des composantes d'un vecteur descriptif, et la fonction associée est le modèle de détermination d'anomalie (i.e. le score d'anomalie obtenu).

Dans le cas présent, une valeur de gain est calculée pour chaque composante du vecteur descriptif dans le modèle de détermination d'anomalie.

Ainsi est obtenu un niveau d'influence par composante du vecteur descriptif.

La sous-étape 52 met en œuvre un calcul de série temporelle alternative.

Dans un mode de réalisation, la sous-étape 52 applique sur un vecteur descriptif donné, appelé ici vecteur descriptif initial, un calcul d'au moins un vecteur descriptif alternatif (ou de contre-exemple).

Le vecteur descriptif initial a un score d'anomalie associé supérieur au seuil d'anomalie.

Un vecteur descriptif alternatif a un score d'anomalie associé inférieur au seuil d'anomalie. Ainsi, le vecteur descriptif alternatif a au moins une composante distincte de la composante de même rang dans le vecteur descriptif initial.

De plus, le vecteur descriptif initial et le vecteur descriptif alternatif sont proches au sens d'une distance, par exemple la distance euclidienne, en d'autres termes la distance entre le vecteur descriptif initial et le vecteur descriptif alternatif est inférieure à un seuil de distance prédéterminé.

De plus, une condition de vraisemblance du vecteur descriptif alternatif est appliquée, par exemple en fonction du score d'anomalie calculé par l'algorithme de détermination d'anomalie.

Le calcul d'un vecteur descriptif alternatif (ou de contre-exemple) est effectué une méthode connue, par exemple utilisant la méthode décrite dans l'article « Model-agnostic and Scalable Counterfactual Explanations via Reinforcement Learning » de RF Samoilescu et al, publié en juin 2021.

En variante, toute autre méthode de calcul de vecteur descriptif alternatif peut être appliquée.

A partir d'un vecteur descriptif alternatif, on calcule une ou plusieurs séries temporelles alternatives, i.e. dont la projection sur la base de fonctions choisies permet d'obtenir le vecteur descriptif alternatif, par application d'une transformation inverse.

La ou les séries temporelles alternatives comportent des valeurs différentes de la série temporelle initiale. Ces valeurs différentes sont mises en exergue et signalées à l'opérateur.

Cela permet de mieux comprendre l'anomalie constatée et d'y remédier.

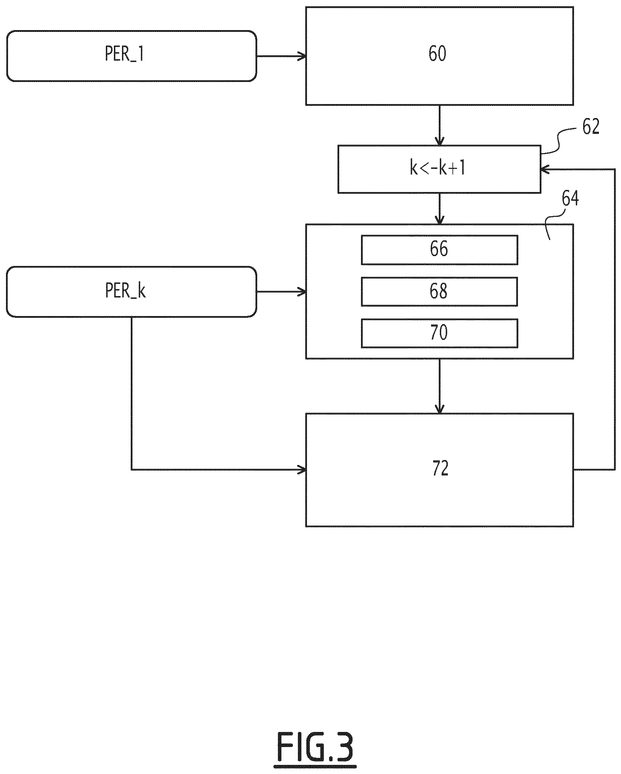

La figure 3 est un synoptique des principales étapes d'un deuxième mode de réalisation du procédé de détection d'anomalie et de détermination d'explication associée.

Dans ce deuxième mode de réalisation la détection est appliquée sur des séries temporelles de données collectées au fur et à mesure, quasiment en temps réel, et prend en compte l'évolution des scores d'anomalie calculés pour chaque équipement surveillé.

Les résultats obtenus relatifs à la détection d'anomalies et leurs explications sont par exemple applicables pour la maintenance prédictive et l'évitement de panne.

Le procédé est appliqué sur des séries temporelles collectées sur des périodes temporelles PER_k successives, pour chaque équipement surveillé.

Par exemple, dans le cas monovarié, pendant chaque période temporelle, une série temporelle de données collectées par un capteur associé à un équipement est traitée.

Dans ce mode de réalisation, chaque période temporelle a une durée associée, qui est par exemple de l'ordre d'une à plusieurs heures.

Par exemple, la durée de période temporelle est inférieure à la durée de période temporelle choisie dans le premier mode de réalisation.

Les séries temporelles de valeurs mesurées lors d'une première période temporelle Per_1 sont obtenues.

Lors d'une première étape de traitement 60, ces premières séries temporelles sont traitées comme dans le premier mode de réalisation. En d'autres termes, la première étape de traitement 60 met en œuvre des étapes analogues aux étapes 40 à 48 décrites précédemment.

Les paramètres du modèle de détermination d'anomalie, mis en œuvre par l'algorithme de détermination d'anomalie, appris lors de l'étape d'apprentissage 42 sont mémorisés.

Ensuite, un indice k de la période temporelle suivante est mis à la valeur k=2 à l'étape 62.

Les séries temporelles comportant des valeurs mesurées pendant la période Per_k sont traitées lors d'une deuxième étape de traitement 64.

La deuxième étape de traitement 64 met en œuvre une projection 66 des séries temporelles sur les M fonctions de base choisies permettant d'obtenir un vecteur descriptif par série temporelle de la période Per_k.

L'étape 66 est suivie d'une étape 68 d'application du modèle de détermination d'anomalie, ce modèle étant paramétré par les paramètres appris préalablement. Pour chaque vecteur descriptif, associé à un équipement, un score d'anomalie est calculé pour la période Per_k.

Le procédé comporte également une étape 70 de détermination d'une évolution du score d'anomalie pour chaque équipement observé. Par exemple, pour un équipement d'indice i, l'étape 70 met en œuvre un calcul de la différence entre le score d'anomalie calculé pour la période Per_k-1 et le score d'anomalie calculé pour la période Per_k.

Ce calcul de différence permet de détecter des variations du score d'anomalie pour un même équipement, et par conséquence de détecter des dérives ou une vitesse de dégradation de l'équipement, même avant que le seuil d'anomalie soit atteint. Avantageusement, cela permet d'anticiper les dégradations éventuelles, et donc d'optimiser la maintenance prédictive.

Le procédé comporte en outre une troisième étape de traitement 72, mise en œuvre sur les séries temporelles obtenues pour la période Per_k, qui est analogue à la première étape de traitement.

En d'autres termes, la troisième étape de traitement 72 met en œuvre des étapes analogues aux étapes 40 à 48 décrites précédemment.

En particulier, lors de la troisième étape de traitement 72, les paramètres du modèle de détermination d'anomalie sont mis à jour par l'étape d'apprentissage (analogue à l'étape 42).

Les paramètres du modèle de détermination d'anomalie appris lors de l'étape d'apprentissage sur les vecteurs descriptifs des séries temporelles de la période Per_k sont mémorisés.

La troisième étape de traitement est suivie par une répétition des étapes 64 à 72 pour une période temporelle suivante, l'indice k étant incrémenté.

Ainsi, avantageusement, le procédé permet d'obtenir sur des périodes temporelles successives un calcul de scores d'anomalie et une détermination d'explication associée, une détection des équipements en anomalie, ainsi qu'une détection de l'évolution des scores d'anomalie, pour un même équipement, sur plusieurs périodes temporelles successives.

## Revendications

1. Procédé de détection d'anomalie et de détermination d'explication associée dans des séries temporelles de données, chaque série temporelle ayant une durée associée et comportant un nombre N de valeurs de fonctionnement d'un équipement prélevées par des capteurs associés à l'équipement, ou des valeurs représentatives du fonctionnement d'un système, relevées à des intervalles réguliers pendant ladite durée, le procédé étant **caractérisé en ce qu'**il comprend des étapes mises en œuvre par un processeur de calcul de :

   - pour chaque série temporelle, projection (40) des valeurs de ladite série temporelle sur un nombre M de fonctions de base et obtention d'un vecteur descriptif de ladite série temporelle de taille M, lesdites fonctions de base étant des fonctions d'une base de transformation en ondelettes ou des fonctions B-Splines ;
   - entraînement (42) d'un modèle de détermination d'anomalie paramétré, par apprentissage machine sur au moins une partie des vecteurs descriptifs calculés, ledit modèle de détermination d'anomalie permettant de calculer un score d'anomalie par vecteur descriptif ;
   - application (44) du modèle de détermination d'anomalie aux vecteurs descriptifs des séries temporelles et obtention d'un score d'anomalie par série temporelle ;
   - détermination (46) d'un sous-ensemble de séries temporelles comportant une anomalie par comparaison du score d'anomalie de chaque série temporelle à un seuil d'anomalie prédéterminé ;
   - pour chaque série temporelle dudit sous-ensemble, détermination (48), à partir du vecteur descriptif de ladite série temporelle, d'au moins une partie des valeurs dudit vecteur descriptif ayant une influence dans l'obtention du score d'anomalie de ladite série temporelle, détermination (48) qui comporte, pour un vecteur descriptif initial,

      ○ un calcul d'au moins un vecteur descriptif alternatif, ledit vecteur descriptif alternatif comprenant au moins une composante distincte de la composante de même rang dans le vecteur descriptif initial, ayant un score d'anomalie associé, obtenu par l'application dudit modèle de détermination d'anomalie paramétré, inférieur au seuil d'anomalie, et étant tel qu'une distance entre le vecteur descriptif initial et le vecteur descriptif alternatif est inférieure à un seuil de distance prédéterminé,
      ○ et
      ○ une détermination d'au moins une série temporelle alternative à partir du vecteur descriptif alternatif, la projection sur ladite base de fonctions choisies de ladite série temporelle alternative permettant d'obtenir ledit vecteur descriptif alternatif, la ou les séries temporelles alternatives comportant des valeurs différentes des valeurs de la série temporelle initiale, ces valeurs différentes étant mises en exergue et signalées à l'opérateur par une interface homme-machine.

2. Procédé selon la revendication 1, dans lequel la détermination (48), à partir du vecteur descriptif de ladite série temporelle, d'au moins une partie des valeurs dudit vecteur descriptif ayant une influence dans l'obtention du score d'anomalie de ladite série temporelle comporte un calcul (50) d'un niveau d'influence dans l'obtention du score d'influence pour chaque composante dudit vecteur descriptif.

3. Procédé selon la revendication 2, dans lequel le calcul d'un niveau d'influence met en œuvre un calcul de valeurs de Shapley, ledit niveau d'influence étant égal à la valeur de Shapley calculée pour chaque composante dudit vecteur descriptif.

4. Procédé selon l'une quelconque des revendications 1 à 3, mis en œuvre sur des séries temporelles, comportant au moins une première série temporelle et au moins une deuxième série temporelle de valeurs de fonctionnement d'un équipement ou système, collectées sur des périodes temporelles successives comportant, au moins une première période temporelle et une deuxième période temporelle, succédant à la première période temporelle, le procédé comportant :

- -l'obtention d'un premier score d'anomalie d'un vecteur descriptif déterminé pour une série temporelle sur la première période temporelle, en mettant en œuvre un modèle de détermination d'anomalie paramétré par des paramètres calculés pour ladite première période temporelle,
- l'obtention d'un deuxième score d'anomalie d'un vecteur descriptif déterminé pour une série temporelle d'une série temporelle sur la deuxième période temporelle en mettant en œuvre le modèle de détermination d'anomalie paramétré par des paramètres calculés pour ladite première période temporelle, et
- une détermination d'évolution de score d'anomalie pour ledit équipement ou système, consistant à calculer une différence entre le deuxième score d'anomalie calculé et le premier score d'anomalie calculé.

5. Procédé selon la revendication 4, comportant en outre une mise à jour des paramètres du modèle de détermination d'anomalie paramétré sur ladite deuxième période temporelle.

6. Programme d'ordinateur comportant des instructions logicielles qui, lorsqu'elles sont exécutées par un dispositif électronique programmable, mettent en œuvre un procédé de détection d'anomalie et de détermination d'explication associée conforme aux revendications 1 à 5.

7. Dispositif de détection d'anomalie et de détermination d'explication associée dans des séries temporelles de données, chaque série temporelle ayant une durée associée et comportant un nombre N de valeurs de fonctionnement d'un équipement prélevées par des capteurs associés à l'équipement, ou des valeurs représentatives du fonctionnement d'un système, relevées à des intervalles réguliers pendant ladite durée, le dispositif comportant ou étant connecté à une interface homme-machine, le dispositif étant caractérisé en qu'il comporte un processeur de calcul configuré pour mettre en œuvre :

- un module de projection (22), pour chaque série temporelle, des valeurs de ladite série temporelle sur un nombre M de fonctions de base et obtention d'un vecteur descriptif de ladite série temporelle de taille M, lesdites fonctions de base étant des fonctions d'une base de transformation en ondelettes ou des fonctions B-Splines ;
- un module d'entraînement (24) d'un modèle de détermination d'anomalie paramétré, par apprentissage machine sur au moins une partie des vecteurs descriptifs calculés, ledit modèle de détermination d'anomalie permettant de calculer un score d'anomalie par vecteur descriptif ;
- un module (26) application du modèle de détermination d'anomalie aux vecteurs descriptifs des séries temporelles et obtention d'un score d'anomalie par série temporelle ;
- un module (28) de détermination d'un sous-ensemble de séries temporelles comportant une anomalie par comparaison du score d'anomalie de chaque série temporelle à un seuil d'anomalie prédéterminé ;
- un module (30) de détermination, pour chaque série temporelle dudit sous-ensemble, à partir du vecteur descriptif de ladite série temporelle, d'au moins une partie des valeurs dudit vecteur descriptif ayant une influence dans l'obtention du score d'anomalie de ladite série temporelle, qui effectue pour un vecteur descriptif initial, un calcul d'au moins un vecteur descriptif alternatif, ledit vecteur descriptif alternatif comprenant au moins une composante distincte de la composante de même rang dans le vecteur descriptif initial, ayant un score d'anomalie associé, obtenu par l'application dudit modèle de détermination d'anomalie paramétré, inférieur au seuil d'anomalie, et étant tel qu'une distance entre le vecteur descriptif initial et le vecteur descriptif alternatif est inférieure à un seuil de distance prédéterminé, et de détermination d'au moins une série temporelle alternative à partir du vecteur descriptif alternatif, la projection sur ladite base de fonctions choisies de ladite série temporelle alternative permettant d'obtenir ledit vecteur descriptif alternatif, la ou les séries temporelles alternatives comportant des valeurs différentes des valeurs de la série temporelle initiale, ces valeurs différentes étant mises en exergue et signalées à l'opérateur par ladite interface homme-machine.

**Patentansprüche**

1. Verfahren zum Erkennen einer Anomalie und zum Bestimmen einer zugehörigen Erklärung in Zeitreihen von Daten, wobei jede Zeitreihe eine zugehörige Dauer aufweist und umfassend eine Anzahl N von Betriebswerten einer Ausrüstung, die von Sensoren erfasst werden, die mit der Ausrüstung assoziiert sind, oder von Werten, die repräsentativ für den Betrieb eines Systems sind und in regelmäßigen Intervallen während der Dauer erfasst werden, wobei das Verfahren **dadurch gekennzeichnet ist, dass** es folgende Schritte umfasst, die von einem Rechenprozessor implementiert werden:

- für jede Zeitreihe, Projizieren (40) von Werten der Zeitreihe auf eine Anzahl M von Basisfunktionen und Erlangen eines Beschreibungsvektors der Zeitreihe mit Größe M, wobei die Basisfunktionen Funktionen einer Wavelet-Transformationsbasis oder B-Splines-Funktionen sind;

- Trainieren (42) eines parametrisierten Anomaliebestimmungsmodells durch maschinelles Lernen auf mindestens einem Teil der berechneten Beschreibungsvektoren, wobei das Anomaliebestimmungsmodell ein Berechnen einer Anomaliebewertung pro Beschreibungsvektor ermöglicht;

- Anwenden (44) des Anomaliebestimmungsmodells auf die Beschreibungsvektoren der Zeitreihen und Erlangen einer Anomaliebewertung pro Zeitreihe;

- Bestimmen (46) einer Teilmenge von Zeitreihen mit einer Anomalie durch Vergleichen der Anomaliebewertung jeder Zeitreihe mit einem vorbestimmten Anomalieschwellenwert;

- für jede Zeitreihe der Teilmenge, Bestimmen (48), anhand des Beschreibungsvektors der Zeitreihe, von mindestens einem Teil der Werte des Beschreibungsvektors, die einen Einfluss auf das Erlangen der Anomaliebewertung der Zeitreihe haben, wobei die Bestimmung (48) für einen anfänglichen Beschreibungsvektor Folgendes umfasst

  ○ eine Berechnung von mindestens einem alternativen Beschreibungsvektor umfasst, der alternative Beschreibungsvektor umfassend mindestens eine Komponente, die sich von der gleichrangigen Komponente in dem anfänglichen Beschreibungsvektor unterscheidet und eine zugehörige Anomaliebewertung aufweist, die durch Anwenden des parametrisierten Anomaliebestimmungsmodells erlangt wird und unter dem Anomalieschwellenwert ist, und derart ist, dass ein Abstand zwischen dem anfänglichen Beschreibungsvektor und dem alternativen Beschreibungsvektor kleiner ist als ein vorbestimmter Abstandsschwellenwert,
  ○ und
  ○ eine Bestimmung mindestens einer alternativen Zeitreihe aus dem alternativen Beschreibungsvektor, wobei durch Projektion ausgewählter Funktionen der alternativen Zeitreihe auf die genannte Basis der genannte alternative Beschreibungsvektor erlangt wird, die oder die alternative(n) Zeitreihe(n) umfassend Werte, die sich von den Werten der anfänglichen Zeitreihe unterscheiden, wobei diese unterschiedlichen Werte hervorgehoben und dem Bediener über eine Mensch-Maschine-Schnittstelle signalisiert werden.

2. Verfahren nach Anspruch 1, wobei das Bestimmen (48), anhand des Beschreibungsvektors der Zeitreihe, von mindestens einem Teil der Werte des Beschreibungsvektors, die einen Einfluss auf das Erlangen der Anomaliebewertung der Zeitreihe haben, ein Berechnen (50) eines Einflussniveaus beim Erlangen der Einflussbewertung für jede Komponente des Beschreibungsvektors umfasst.

3. Verfahren nach Anspruch 2, wobei das Berechnen eines Einflussniveaus ein Berechnen von Shapley-Werten implementiert, wobei das Einflussniveau gleich wie der Shapley-Wert ist, der für jede Komponente des Beschreibungsvektors berechnet wird.

4. Verfahren nach einem der Ansprüche 1 bis 3, implementiert bei Zeitreihen, umfassend mindestens eine erste Zeitreihe und mindestens eine zweite Zeitreihe von Betriebswerten einer Ausrüstung oder eines Systems, die in aufeinanderfolgenden Zeitperioden gesammelt werden, umfassend mindestens eine erste Zeitperiode und eine zweite Zeitperiode, die auf die erste Zeitperiode folgt, das Verfahren umfassend:

   - -Erlangen einer ersten Anomaliebewertung eines Beschreibungsvektors, der für eine Zeitreihe über die erste Zeitperiode bestimmt wird, durch Implementieren eines Anomaliebestimmungsmodells, das durch Parameter parametrisiert ist, die für die erste Zeitperiode berechnet werden,
   - Erlangen einer zweiten Anomaliebewertung eines Beschreibungsvektors, der für eine Zeitreihe einer Zeitreihe über die zweite Zeitperiode bestimmt wird, durch Implementieren des Anomaliebestimmungsmodells, das durch Parameter parametrisiert ist, die für die erste Zeitperiode berechnet werden, und
   - Bestimmen der Entwicklung der Anomaliebewertung für die Ausrüstung oder das System, bestehend aus einem Berechnen einer Differenz zwischen der berechneten zweiten Anomaliebewertung und der berechneten ersten Anomaliebewertung.

5. Verfahren nach Anspruch 4, ferner umfassend eine Aktualisierung der Parameter des parametrisierten Anomaliebestimmungsmodells über die zweite Zeitperiode.

6. Computerprogramm, umfassend Softwareanweisungen, die, wenn sie von einer programmierbaren elektronischen Vorrichtung ausgeführt werden, ein Verfahren zum Erkennen von Anomalien und zum Bestimmen einer zugehörigen Erklärung nach den Ansprüchen 1 bis 5.

7. Vorrichtung zum Erkennen von Anomalien und Bestimmen einer zugehörigen Erklärung in Zeitreihen von Daten,wobei jede Zeitreihe eine zugehörige Dauer aufweist und eine Anzahl N von Werten für den Betrieb einer Ausrüstung, die von mit der Einrichtung zugehörigen Sensoren erhoben werden, oder von Werten, die repräsentativ für den Betrieb eines Systems sind, umfasst, die in regelmäßigen Abständen während der Dauer erfasst werden, wobei die Vorrichtung eine Mensch-Maschine-Schnittstelle umfasst oder damit verbunden ist, wobei die Vorrichtung **dadurch gekennzeichnet ist, dass** sie einen Rechenprozessor umfasst, der konfiguriert ist, um Folgendes zu implementieren:

- ein Projektionsmodul (22), das für jede Zeitreihe die Werte der Zeitreihe auf eine Anzahl M von Basisfunktionen projiziert und Erlangen eines Beschreibungsvektors der Zeitreihe der Größe M, wobei die Basisfunktionen Funktionen einer Wavelet-Transformationsbasis oder B-Splines-Funktionen sind;
- ein Trainingsmodul (24) für ein parametrisiertes Anomaliebestimmungsmodell durch maschinelles Lernen auf mindestens einem Teil der berechneten Beschreibungsvektoren, wobei das Anomaliebestimmungsmodell das Berechnen einer Anomaliebewertung pro Beschreibungsvektor ermöglicht;
- ein Modul (26) zum Anwenden des Anomaliebestimmungsmodell auf die Beschreibungsvektoren der Zeitreihen und Erlangen einer Anomaliebewertung pro Zeitreihe;
- ein Modul (28) zum Bestimmen einer Teilmenge von Zeitreihen, umfassend eine Anomalie, durch Vergleichen der Anomaliebewertung jeder Zeitreihe mit einem vorbestimmten Anomalieschwellenwert;
- ein Modul (30) zum Bestimmung, für jede Zeitreihe der Teilmenge, anhand des Beschreibungsvektors der Zeitreihe, von mindestens einem Teil der Werte des Beschreibungsvektors, die einen Einfluss auf das Erlangen der Anomaliebewertung der Zeitreihe haben, das für einen anfänglichen Beschreibungsvektor eine Berechnung von mindestens einem alternativen Beschreibungsvektor ausführt, der alternative Beschreibungsvektor umfassend mindestens eine Komponente, die sich von der gleichrangigen Komponente in dem anfänglichen Beschreibungsvektor unterscheidet und eine zugehörige Anomaliebewertung aufweist, die durch Anwenden des parametrisierten Anomaliebestimmungsmodells erlangt wird und unter dem Anomalieschwellenwert ist, und derart ist, dass ein Abstand zwischen dem anfänglichen Beschreibungsvektor und dem alternativen Beschreibungsvektor kleiner ist als ein vorbestimmter Abstandsschwellenwert ist, und Bestimmen mindestens einer alternativen Zeitreihe anhand des alternativen Beschreibungsvektors, wobei es die Projektion der alternativen Zeitreihe auf die Basis ausgewählter Funktionen ermöglicht, den alternativen Beschreibungsvektor zu erlangen, wobei die alternative Zeitreihe oder die alternativen Zeitreihen Werte umfassen, die sich von den Werten der anfänglichen Zeitreihe unterscheiden, wobei diese unterschiedlichen Werte hervorgehoben und dem Bediener durch die Mensch-Maschine-Schnittstelle signalisiert werden.

## Claims

1. A method of detecting an anomaly and determining an associated explanation in time series of data, each time series having an associated duration and comprising a number N of operating values of an item of equipment taken by sensors associated with the item of equipment, or values representative of the operation of a system, taken at regular intervals during said duration, the method being **characterized in that** it comprises steps implemented by a computational processor of:

- for each time series, projecting (40) of the values of said time series onto a number M of basis functions and obtaining a descriptive vector of said time series of size M, said basis functions being functions of a wavelet transform basis or B-Spline functions;
- training (42) a parameterised anomaly determination model by machine learning on at least some of the descriptive vectors calculated, said anomaly determination model making it possible to calculate an anomaly score for each descriptive vector;
- applying (44) the anomaly determination model to the descriptive vectors of the time series and obtaining an anomaly score for each time series;
- determining (46) a subset of time series containing an anomaly by comparing the anomaly score of each time series with a predetermined anomaly threshold;
- for each time series of said subset, determining (48), from the descriptive vector of said time series, at least some of the values of said descriptive vector that influence the obtaining of the anomaly score of said time series, which determining (48) comprises, for an initial descriptive vector,

○ calculating at least one alternative descriptive vector, said alternative descriptive vector comprising at least one component distinct from the component of the same rank in the initial descriptive vector, having an associated anomaly score, obtained by applying said parameterised anomaly determination model, that is lower than the anomaly threshold, and being such that a distance between the initial descriptive vector and the alternative descriptive vector is less than a predetermined distance threshold,

○ and

○ determining at least one alternative time series from the alternative descriptive vector, the projection of said alternative time series onto said base of selected functions making it possible to obtain said alternative descriptive vector, the one or more alternative time series comprising values different from the values of the initial time series, these different values being highlighted and signalled to the operator by a human-machine interface.

2. The method according to claim 1, wherein determining (48), from the descriptive vector of said time series, of at least some of the values of said descriptive vector that influence the obtaining of the anomaly score of said time series comprises calculating (50) a level of influence in obtaining the influence score for each component of said descriptive vector.

3. The method according to claim 2, wherein the calculating of a level of influence implements a calculation of Shapley values, said level of influence being equal to the Shapley value calculated for each component of said descriptive vector.

4. The method according to any one of claims 1 to 3, implemented on time series, comprising at least a first time series and at least a second time series of operating values of an item of equipment or system, collected over successive time periods comprising, at least, a first time period and a second time period, succeeding the first time period, the method comprising:

- -obtaining a first anomaly score of a descriptive vector determined for a time series over the first time period, by implementing an anomaly determination model parameterised by parameters calculated for said first time period,

- obtaining a second anomaly score of a descriptive vector determined for a time series of a time series over the second time period by implementing the anomaly determination model parameterised by parameters calculated for said first time period, and

- an anomaly score change determination for said item of equipment or system, consisting of calculating a difference between the second anomaly score calculated and the first anomaly score calculated.

5. The method according to claim 4, further comprising an updating of the parameters of the anomaly determination model parameterised over said second time period.

6. A computer program comprising software instructions which, when executed by a programmable electronic device, implement a method of detecting an anomaly and determining an associated explanation in accordance with claims 1 to 5.

7. A device for detecting an anomaly and determining an associated explanation in time series of data, each time series having an associated duration and comprising a number N of operating values of an item of equipment taken by sensors associated with the item of equipment, or values representative of the operation of a system, taken at regular intervals during said duration, the device comprising or being connected to a human-machine interface, the device being **characterised in that** it comprises a calculation processor configured to implement:

- a module (22) for projecting, for each time series, the values of said time series onto a number M of basis functions and obtaining a descriptive vector of said time series of size M, said basis functions being functions of a wavelet transform basis or B-Spline functions;

- a module (24) for training a parameterised anomaly determination model by machine learning on at least some of the descriptive vectors calculated, said anomaly determination model making it possible to calculate an anomaly score for each descriptive vector;

- a module (26) for applying the anomaly determination model to the descriptive vectors of the time series and obtaining an anomaly score for each time series;

- a module (28) for determining a subset of time series containing an anomaly by comparing the anomaly score of each time series with a predetermined anomaly threshold;

- a module (30) for determining, for each time series of said subset, from the descriptive vector of said time series, at least some of the values of said descriptive vector that influence the obtaining of the anomaly score of said time series, which performs for an initial descriptive vector, a calculation of at least one alternative descriptive vector, said alternative descriptive vector comprising at least one component distinct from the component of the same rank in the initial descriptive vector, having an associated anomaly score, obtained by applying said parameterised anomaly determination model, that is lower than the anomaly threshold, and being such that a distance between the initial descriptive vector and the alternative descriptive vector is less than a predetermined distance threshold, and determining at least one alternative time series from the alternative descriptive vector, projecting said alternative time series onto said base of selected functions to obtain said alternative descriptive vector, the alternative time series or series comprising values different from the values of the initial time series, these different values being highlighted and indicated to the operator by said man-machine interface.

FIG.1

FIG.2

FIG.3

## RÉFÉRENCES CITÉES DANS LA DESCRIPTION

**Documents brevets cités dans la description**

- WO 2022093271 A1

- US 2021390457 A1

**Littérature non-brevet citée dans la description**

- **RF SAMOILESCU et al.** *Model-agnostic and Scalable Counterfactual Explanations via Reinforcement Learning*, June 2021